# EUROPEAN PATENT SPECIFICATION

(11) **EP 3 377 675 B1**
(45) Date of publication and mention of the grant of the patent: **22.03.2023**
(21) Application number: 16867306.9
(22) Date of filing: 18.11.2016
(51) Int. Cl.: C25B 13/04, C25B 15/08, C25B 1/55, C25B 9/19

(54) **ELECTROCHEMICAL PRODUCTION OF HYDROGEN WITH DYE-SENSITIZED SOLAR CELL-BASED ANODE**
ELEKTROCHEMISCHE HERSTELLUNG VON WASSERSTOFF MIT FARBSTOFFSENSIBILISIERTER SOLARZELLENBASIERTER ANODE
PRODUCTION ÉLECTROCHIMIQUE D'HYDROGÈNE AVEC UNE ANODE À BASE DE PHOTOPILE À COLORANT

(30) Priority: 18.11.2015 US 201562257111 P; 04.03.2016 US 201615061427
(43) Date of publication of application: 26.09.2018
(73) Proprietor: Enlighten Innovations Inc., Calgary, Alberta T2G 1B1 (CA)
(72) Inventor: BHAVARAJU, Sai, Salt Lake City, Utah 84119 (US)
(74) Representative: Harrison IP Limited
(86) International application number: PCT/US2016/062957
(87) International publication number: WO 2017/087911

(56) References cited:
- US-A- 4 466 869
- US-A- 4 521 800
- US-A1- 2008 131 762
- US-A1- 2010 133 111
- US-A1- 2012 175 268
- US-A1- 2012 175 268
- US-B1- 6 936 143
- US-B1- 8 388 818
- US-B2- 7 122 873

## Description

### CROSS-REFERENCE TO RELATED APPLICATION

This application claims the benefit of U.S. Provisional Application No. 62/257,111, filed November 18, 2015 and entitled "Low-cost, Solar-driven Power and Fuel Generation." This application is also a continuation-in-part of United States Patent Application No. 15/061,427, filed March 4, 2016 and entitled "Electrochemical Production of Hydrogen."

### FIELD OF THE INVENTION

The present invention relates in general to the electrochemical production of hydrogen. More particularly, the present invention provides systems and methods for producing hydrogen through the use of an electrochemical cell in which the anode comprises the anode components of a dye-sensitized solar cell (DSSC).

### BACKGROUND OF THE INVENTION

Hydrogen gas is used in a variety of industrial applications. For instance, hydrogen is often used in the creation of ammonia for fertilizer, for the conversion of heavy petroleum sources to lighter fractions through a process called hydrocracking, for the production of nickel-hydrogen batteries, and for several other applications. Hydrogen is a clean burning fuel and a source of energy for fuel cells.

In order to obtain hydrogen for use in such applications, hydrogen can be produced through an assortment of techniques, including through the electrolysis of water, the reaction of a metal with an acid, the steam reformation of natural gas, the partial oxidation of hydrocarbons, and through several other methods.

Indeed, in some instances, hydrogen gas is formed through the electrolysis of water. In such instances, water or an alkaline water solution, is placed in an electrolytic cell comprising an anode and a cathode. Then as an electrical current is passed between the anode and cathode, hydrogen is produced at the cathode by reduction of water and oxygen is produced at the anode by water oxidation. For instance, the two electrode half reactions for traditional alkaline water electrolysis are:
Anode:

   2OH⁻ → H₂O + ½O₂ + 2e⁻
Cathode:

   2 H₂O + 2e⁻ → 2OH⁻ + H₂

Moreover, the overall reaction of traditional alkaline water splitting is:
Overall:

H₂O→ H₂ + ½O₂

Construction of an effective low-cost system for solar energy conversion into hydrogen is an attractive option in the field of solar light energy utilization and energy storage. Splitting water photocatalytically has been studied as a promising technology [S. Rajaambal et al., Recent developments in solar H2 generation from water splitting, J. Chem. Sci. Vol. 127, No. 1, January 2015, pp. 33-47], but a capable system that can utilize visible light portion of sun's energy has not yet been demonstrated. Typically, direct solar water splitting is accomplished by utilizing a wide bandgap semiconductor photocatalysis. To date, the highest efficiency demonstrated is well below 10%, due to limitations with (1) efficient photon harvesting including full visible spectra, (2) generation of sufficient electron flux, and (3) decreasing electron-hole recombination and utilization of charge carriers for intended water splitting reaction.

US2012/175268 discloses electrochemical systems and methods for producing hydrogen. Generally, the systems and methods involve providing an electrochemical cell that includes an anolyte compartment holding an anode in contact with an anolyte, wherein the anolyte includes an oxidizable substance having a higher standard oxidation potential than water. The cell further comprises a catholyte compartment holding a cathode in contact with a catholyte that includes a substance that reduces to form hydrogen. Additionally, the cell includes an alkali cation conductive membrane that separates the anolyte compartment from the catholyte compartment. As an electrical potential passes between the anode and cathode, the reducible substance reduces to form hydrogen and the oxidizable substance oxidizes to form an oxidized product.

US2010/133111 relates to catalytic materials, photoanodes, and systems for electrolysis and/or formation of water are provided which can be used for energy storage, particularly in the area of solar energy conversion, and/or production of oxygen and/or hydrogen.

US4521800 relates to a corrosion-resistant, multilayer photoelectrode for use in a photoelectrochemical cell and a process for producing said photoelectrode by preparing an effective layer of an insulator material on a base semiconductor and depositing a layer of conducting material on said layer of insulating material.

US8388818 discloses lightweight photoelectrochemical system for real-time hydrogen production from water and sunlight, using lightweight multi-junction photo electrodes made from the highly reliable and efficient copper indium selenide thin films, preferably made by low-cost electrodeposition on flexible foil.

There is a need in the art for improved systems and methods for producing hydrogen through the use of a solar powered electrochemical cell.

### BRIEF SUMMARY OF THE INVENTION

The disclosed invention provides apparatus and methods for producing hydrogen gas through the use of an electrochemical cell. The electrochemical cell includes an anolyte compartment holding an anolyte and a photo anode in contact with the anolyte, a catholyte compartment holding a catholyte and a cathode in contact with the catholyte, an alkali cation conductive membrane selective to cations of the alkali metal, the membrane being positioned between the anolyte compartment and the catholyte compartment, and an electrical connection between the photo anode and the cathode. The anolyte comprises an alkali metal iodide in a suitable solvent. The solvent may be an aqueous or organic solvent.

The photo anode includes the anode components of a dye-sensitized solar cell (DSSC). A DSSC is a semiconductor photovoltaic device that directly converts solar radiation into electric current. The DSSC anode components include: (i) a transparent conductive material layer on an optically transparent glass substrate to form a transparent conductive substrate; (ii) a wide gap semiconductor current collector in communication with or attached to the transparent conductive substrate, which may be a mesoporous oxide layer (typically, TiO₂ ) deposited on the anode to activate electronic conduction; and (iii) a photo receptive charge transfer dye (sensitizer) in communication with or attached to the transparent conductive substrate to enhance light absorption.

When exposed to sunlight, the dye sensitizer becomes excited and injects an electron into the conduction band of the mesoporous oxide film. These generated electrons are conducted to the anode and are utilized at the external load before being collected by the electrolyte at the cathode surface to complete the cycle (i.e. production of hydrogen). The alkali metal iodide in the electrolyte, which is in contact with the dye, then donates electrons to the dye restoring the dye to the initial unexcited state, while the alkali metal iodide itself is oxidized to triiodide or molecular iodine. Thus, irradiating the photo anode oxidizes iodide ions to form molecular iodine or triiodide ions and generate electrons. In the embodiment where the alkali metal is sodium, the following reactions may occur at the anode:

NaI→ ½ I₂ + Na⁺ + e⁻

3NaI→ I₃⁻ + 3Na⁺ + 2 e⁻

The catholyte includes a reducible substance that is electrochemically reducible to form hydrogen. The catholyte comprises water, methanol or a combination thereof. In the embodiment where the reducible substance is water, the following non-limiting reactions may occur at the cathode:

H₂O + 2e⁻ → 2OH⁻ + H₂

2Na⁺ + 2H₂O + 2e⁻ → 2NaOH + H₂ (where the catholyte comprises an aqueous solution and Na+ cations are transported from the anolyte, through the alkali cation selective membrane, and to the catholyte).

In the embodiment where the reducible substance is methanol, the following non-limiting reaction may occur at the cathode:
2Na⁺ + 2CH₃OH + 2e⁻ → 2NaOCH₃ + H₂ (where the catholyte comprises methanol and Na⁺ cations are transported from the anolyte, through the alkali cation selective membrane, and into the catholyte).

With respect to the alkali cation selective membrane, the membrane can comprise virtually any suitable alkali cation selective membrane. Some examples of such membranes include, but are not limited to, a NaSICON membrane, a Li SICON membrane, a KSICON membrane, a sodium conducting glass, a β or 'alumina membrane, and a solid polymeric sodium ion conductive membrane.

An electrical connection between the photo anode and the cathode provides an electrical pathway for the electrons formed at the photo anode to travel to the cathode to reduce the reducible substance in the catholyte compartment to form hydrogen and a reduced product.

The electrochemical cell further includes an anolyte compartment outlet for removing the molecular iodine and a catholyte compartment outlet for removing the reduced product.

The electrochemical cell may have a regeneration cell. The regeneration cell includes an inlet to receive the molecular iodine or triiodide ions from the anolyte compartment and the reduced product from the catholyte compartment. The regeneration cell is configured to cause a chemical reaction between the molecular iodine or triiodide ions and the reduced product, such as alkali hydroxide, to regenerate the alkali metal iodide. For instance, where sodium hydroxide is the reduced product formed in the catholyte compartment, the molecular iodine or triiodide complex ion and the sodium hydroxide can be reacted together to regenerate sodium iodide, which can be recycled through the cell. This regeneration of the alkali metal iodide ensures continuous production of hydrogen from water without the requirement to supply fresh alkali metal iodide.

The disclosed invention provides methods for producing hydrogen gas through the use of an electrochemical cell as described herein. Upon irradiating the photo anode, the iodide ions are oxidized to form molecular iodine and electrons or triiodide ions and electrons. The electrons are conducted from the photo anode to the cathode to reduce the reducible substance to form hydrogen and a reduced product.

The disclosed method may further include the step of regenerating the alkali metal iodide by reacting the molecular iodine or triiodide ion with the reduced produce generated in the catholyte compartment. The reduced product is alkali hydroxide, alkali methoxide or a combination thereof. Thus, the step of regenerating the alkali metal iodide may include the steps of recovering the molecular iodine or triiodide ions from the anolyte compartment, recovering the reduced product from the catholyte compartment, and reacting the molecular iodine or triiodide ions to regenerate the alkali metal iodide.

These features and advantages of the present invention will become more fully apparent from the following description and appended claims, or may be learned by the practice of the invention as set forth hereinafter.

### BRIEF DESCRIPTION OF THE SEVERAL DRAWINGS

In order that the manner in which the above-recited and other features and advantages of the invention are obtained and will be readily understood, a more particular description of the invention briefly described above will be rendered by reference to specific embodiments thereof that are illustrated in the appended drawings. Understanding that the drawings depict only typical embodiments of the invention and are not therefore to be considered to be limiting of its scope, the invention will be described and explained with additional specificity and detail through the use of the accompanying drawings in which:
Figure 1 depicts a schematic diagram of a representative embodiment of an electrochemical cell that is configured to produce hydrogen;
Figure 2A depicts a flow chart showing a representative embodiment of a method for using the electrochemical cell;
Figure 2B depicts a schematic diagram of a representative embodiment of the electrochemical cell in which the cell comprises an anolyte that comprises sodium iodide, and a catholyte that comprises a sodium hydroxide solution;
Figure 3 depicts a conceptual scheme of H₂ evolution from water over a dye-sensitized n-type semiconductor using iodide (I⁻) as an electron donor, with the energy diagram for the coumarin NKX-2677 dye system;
Figures 4A and 4B are graphs of voltage vs. time obtained from a preliminary hydrogen generation electrolysis cell;
Figure 5 is a photomicrograph of an anode of a DSSC;
Figure 6 shows a graph of averaged photoelectrical characteristics (voltage vs. current density) for the type of DSSC anode shown in Fig. 5.

### DETAILED DESCRIPTION OF THE INVENTION

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment. Additionally, while the following description refers to several embodiments and examples of the various components and processes of the described invention, all of the described embodiments and examples are to be considered, in all respects, as illustrative only and not as being limiting in any manner.

Furthermore, the described features, structures, characteristics, processes, or methods of the invention may be combined in any suitable manner in one or more embodiments. In the following description, numerous specific details are provided, such as examples of suitable anolytes, catholytes, alkali cation selective membranes, anode materials, cathode materials, etc., to provide a thorough understanding of embodiments of the invention. One having ordinary skill in the relevant art will recognize, however, that the invention may be practiced without one or more of the specific details, or with other methods, components, materials, and so forth. In other instances, well-known structures, materials, processes, or operations are not shown or described in detail to avoid obscuring aspects of the invention.

In the disclosed invention, a novel device with > 20% efficient system is disclosed. In one embodiment, the anode components of a dye-sensitized solar cell (DSSC) are combined with a non-traditional ceramic membrane based electrolysis cell to effectively utilize the solar energy to conduct water electrolysis. In one disclosed embodiment, the device of the present invention separately conducts the solar energy harvesting and water splitting in two separate compartments separated by an alkali cation selective membrane. The alkali cation selective membrane may be a ceramic ion conductor. The ceramic alkali ion conductor can be any number of alkali metal ion conductors. In one embodiment, the alkali ion conductor comprises NaSICON. Generation of solar electrons is done in the anode compartment using a dye-sensitized solar cell based anode. The electrons are transported to the cathode compartment where cathodic hydrogen generation from alkaline water occurs. The ceramic ion conducting membrane allows two distinct phenomena to occur in the two electrode compartments while allowing a common ion charge carrier to migrate between anode to cathode compartments.

To provide a better understanding of the described systems and methods, the electrochemical cell is described below in more detail. This description of the cell is then followed by a more detailed description of the manner in which the cell can be operated.

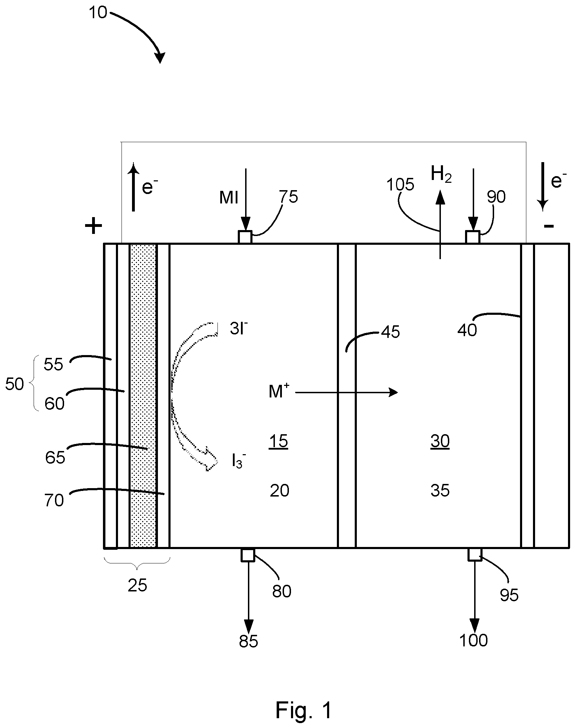

Turning now to the electrochemical cell, the cell comprises a photo anode electrically coupled to a cathode that allows it to produce hydrogen gas. By way of non- limiting illustration, Figure 1 shows a representative embodiment in which the electrochemical cell 10 comprises an anolyte compartment 15 that houses an anolyte 20 and a photo anode 25. A catholyte compartment 30 houses a catholyte 35 and cathode 40. An alkali cation selective membrane 45 selective to cations of the alkali metal separates the anolyte compartment 15 from the catholyte compartment 30.

With respect to the anolyte compartment 15 and the catholyte compartment 30 in general, the two compartments can be any suitable shape and have any other suitable characteristic that allows the cell 10 to function as intended. By way of example, the anolyte and the catholyte compartments can be tubular, rectangular, or be any other suitable shape.

The anolyte 20 comprises an alkali metal iodide, such as sodium iodide, lithium iodide, or potassium iodide. The photo anode 25 is in contact with the anolyte 20. The alkali metal iodide may have a concentration in the range from 1 to 12 M, with or without added molecular iodine. The alkali metal iodide may be used in a solid state configuration.

The photo anode 25 includes the anode components of a dye- sensitized solar cell (DSSC). More specifically, the photo anode 25 comprises a transparent conductive substrate 50. The transparent conductive substrate 50 may include an optically transparent glass substrate 55 having a transparent conductive material layer 60 thereon.

The photo anode 25 further includes a wide gap semiconductor current collector 65 in communication with or attached to the transparent conductive substrate 50. The semiconductor current collector 65 may be a mesoporous oxide layer, such as TiO₂, deposited on the transparent conductive substrate to activate electronic conduction. A photo receptive charge transfer dye 70 (sensitizer) is in communication with or attached to the transparent conductive substrate 50 to enhance light absorption. In one embodiment, the charge transfer dye 70 is coated on the mesoporous titanium dioxide 65.

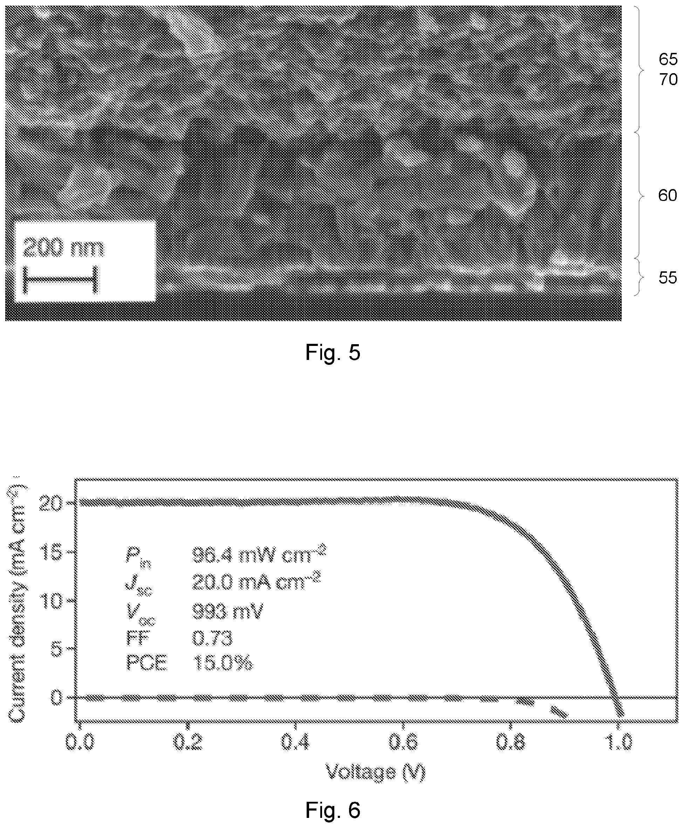

Fig. 5 is a photomicrograph of an anode of a DSSC having the structures as identified in Fig. 1. The transparent conductive substrate 50 was fluorine doped tin oxide (FTO). Other known transparent conductive materials can also be used such as, but not limited to, indium doped tin oxide (ITO). The wide gap semiconductor current collector 65 was titanium dioxide and the charge transfer dye 70 was CH₃NH₃PbI₃. Other known charge transfer dyes can also be used such as, but not limited to, cis-bis(isothiocyanato)-bis(2,20- bipyridyl-4,40dicarboxylato)-Ru(II) (known as N719).

The hybrid organic-inorganic perovskite solar cells (PSC type DSSC's) offered high power conversion efficiencies (PCE) of > 20% along with ease of fabrication, and abundant raw material sources. Averaged photoelectrical characteristics of these devices are shown in Figure 6 may be: OCV = 0.993 V; Jsc (Short circuit current density) = 20 mA/cm² , FF (fill factor) = 0.93 and PCE of 15%.

The data from Fig. 6 show that it is possible to obtain a maximum current density of about 20 mA/cm² at a voltage of < 0.7V (difference between HOMO and LUMO of the dye sensitizer). In the presently disclosed invention, the DSSC anode may generate electrons at this operational voltage which are consumed at the cathode to generate hydrogen. In order to increase the voltage or current density, it may increase the size of the photo anode or electrically combine multiple electrolytic cells.

The catholyte 35 comprises a reducible substance that is electrochemically reduced to form hydrogen and a reduced product. In the embodiment where the reducible substance is water, then the reduced product is hydroxide ions, as shown below:

H₂O + 2e⁻ → 2OH⁻ + H₂

In the embodiment where the reducible substance is methanol, then the reduced product is alkoxide ions, as shown below:

2CH₃OH + 2e⁻ → 2OCH₃⁻ + H₂

As the cell 10 functions, the alkali iodide is oxidized to form molecular iodine or triiodide ions. Similarly, as the electrical current passes between the electrodes, the alkali cation M+ (e.g. , Na+ , Li+ , and K+ ) released from the alkali metal iodide (MI) can be selectively conducted through the alkali cation selective membrane 45 (described below) to the catholyte compartment 30, where the cation can react to form an alkali hydroxide or alkali methoxide and gaseous hydrogen product.

In addition to the alkali metal iodide, the anolyte 20 can comprise any other suitable component that allows the alkali metal iodide to be oxidized at the photo anode 25 during hydrogen production at the cathode. For instance, the anolyte can also comprise any suitable: non-aqueous solvent (including, without limitation, glycerol, anhydrous alcohols such as methanol, and/or another suitable non-aqueous solvent), ionic liquid, and/or aqueous solvent, solid-state conductive additive (including, without limitation, graphite, metal particles photo voltage enhancers such as 4-tert butylpyridine and/or another suitable conductive additive), complexing agent (tetramethylammonium, tetrafluroborate, or tetrabutyl ammonium iodide). In this regard, however, the additional additives to the anolyte should not cause the preferential oxidation of another substance over the oxidation of the iodide ions. In some embodiments, the additional additives to the anolyte do chemically react with the oxidized substance (e.g. complexation of tetrabutyl ammonium iodide with molecular iodine to form tetrabutyl ammonium triiodide).

Some non-limiting examples of suitable anolytes 20 are as follows. Specifically, in some embodiments, the anolyte 20 comprises an alkali metal iodide that is mixed with a conductive additive (e.g. , graphite) and a liquid additive/solvent, such as glycerol, to form a semi-solid paste. By way of example, in some embodiments, the anolyte comprises sodium iodide, graphite, and a small amount of glycerol. In other embodiments, the anolyte comprises a non-oxidizable alkali metal salt (e.g., sodium tetrafluroborate or sodium hexafluorophosphate) that is dissolved in a suitable solvent (e.g. , methanol, water, and/or an ionic liquid). For example, in some embodiments, the anolyte comprises oxidizable sodium iodide that is dissolved in a suitable solvent (e.g., methanol, water, and/or an ionic liquid). Along these lines, in still another example, the anolyte comprises sodium iodide in water.

With regard now to the catholyte 35, the catholyte comprises water, methanol, or a combination thereof. The cell 10 reduces water and/or methanol, in the catholyte to form hydrogen.

Some examples of suitable catholytes include, but are not limited to, an aqueous alkali hydroxide solution (e.g. , an aqueous solution comprising sodium hydroxide, lithium hydroxide, and/or potassium hydroxide) and a non-aqueous methanol/alkali methoxide solution, wherein the alkali methoxide is selected from sodium methoxide, lithium methoxide, and potassium methoxide. Indeed, in some embodiments, the catholyte comprises an aqueous sodium hydroxide solution or a non-aqueous methanol/sodium methoxide solution.

Referring now to the photo anode 25 can comprise any suitable characteristic to otherwise function as intended. By way of example, the photo anode 25 can have any suitable characteristic, including, without limitation, being: a flat plate, a flat membrane or a tubular shape.

With respect to the cathode 40, the cathode can comprise any suitable characteristic or material that allows the cell 10 to reduce the reducible substance (e.g., water and/or methanol) to produce hydrogen and to otherwise allow the cell to function as intended. By way of example, the cathode can have any suitable characteristic, including, without limitation, being: a flat plate, a flat membrane, a mesh, a tubular shape, and/or a tubular mesh. Additionally, some examples of suitable cathode materials include, but are not limited to, nickel, stainless steel, graphite, a nickel-cobalt- ferrous alloy (e.g. , a KOVAR^{®} alloy), and/or any other suitable cathode material. Indeed, in some embodiments, the cathode comprises a nickel mesh cathode.

As electrical potential is passed between the photo anode 25 and cathode 40, any suitable reaction that allows the cell 10 to produce hydrogen can occur at the cathode 40. Some examples of suitable anodic reactions when the alkali metal of the oxidizable alkali metal salt is sodium include, but are not limited to, the following:
(A) NaI→ ½ I₂ + Na⁺ + e⁻ (when the anolyte 20 comprises sodium iodide)
(B) 3NaI→ I₃⁻ + 3Na⁺ + 2e⁻ (when the anolyte 20 comprises sodium iodide)

Some examples of suitable cathodic reactions when the alkali metal of the oxidizable alkali metal salt is sodium include, but are not limited to, the following:
(C) H₂O + 2e⁻ → 2OH⁻ + H₂ (where the catholyte comprises water)
(D) 2Na⁺ + 2H₂O + 2e⁻ → 2NaOH + H₂ (where the catholyte comprises an aqueous solution and Na⁺ cations are transported from the anolyte 20, through the membrane 45, and to the catholyte 35)
(E) 2Na⁺ + 2CH₃OH + 2e⁻ → 2NaOCH₃ + H₂ (where the catholyte comprises methanol and Na⁺ cations are transported from the anolyte 20, through the membrane 45 , and into the catholyte 35)

Thus, in some embodiments when the catholyte 35 comprises sodium hydroxide solution then at the end of the electrolysis of water more sodium hydroxide will form in the catholyte compartment 30 along with gaseous hydrogen. Similarly, in some embodiments where the alkali metal salt in the catholyte 35 comprises a lithium methylate and methanol, more lithium methoxide along with gaseous hydrogen will be formed in the catholyte compartment 30 as the cell 10 functions.

Moving now to the alkali cation selective membrane 45, the membrane can comprise virtually any suitable cation selective membrane that is configured to selectively transport an alkali cation (e.g., Na⁺ , Li⁺ , or K⁺) from the anolyte compartment 15 to the catholyte compartment 30 under the influence of an electrical potential. In this manner, the membrane can prevent the anolyte and catholyte from mixing, while still allowing alkali cations (shown as M+ in Figure 1) to migrate to the catholyte compartment 30. Accordingly, in some embodiments, the membrane allows the cell 10 to comprise a non-aqueous anolyte and an aqueous catholyte, an aqueous anolyte and a non-aqueous catholyte, a non-aqueous anolyte and a non-aqueous catholyte, or an aqueous anolyte and an aqueous catholyte.

Some examples of such membranes include, but are not limited to, a NaSICON membrane, (e.g. , a NaSICON-type membrane as produced by Ceramatec, Inc., Salt Lake City, Utah), a LiSICON membrane, a KSICON membrane, a sodium conducting glass, a β or β" alumina membrane, a solid polymeric sodium ion conductive membrane e.g. Nafion^{®}, and any other suitable cation conductive membrane.

In addition to the aforementioned components and characteristics, the described cell 10 can comprise any other suitable component or characteristic. In this regard, in some embodiments, the various compartments of the cell have one or more inlets and/or outlets to allow materials to be added to and/or to be removed from the cell. By way of non- limiting illustration, Figure 1 shows an embodiment in which the anolyte compartment 15 comprises an inlet 75 for introducing the alkali metal iodide (MI) an outlet 80 for removing oxidized products 85 formed by the oxidation of iodide ions (e.g. I₂, or I₃⁻) from the anolyte compartment. The catholyte compartment 30 comprises an inlet 90 for introducing water, methanol, and other catholyte components and an outlet 95 for removing the reduced product 100, including an alkali hydroxide and/or an alkali methoxide, from the catholyte compartment 30 (depending on whether the catholyte 35 originally comprised water and/or methanol). The produced hydrogen gas 105 is also removed and recovered from the catholyte compartment 30.

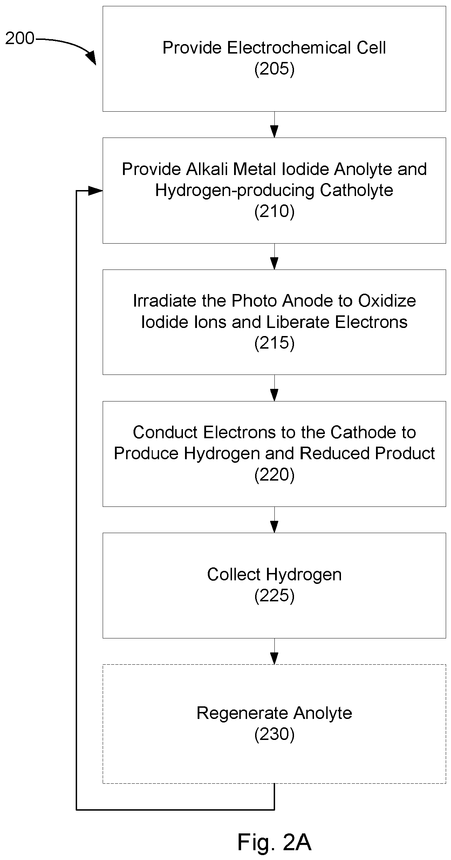

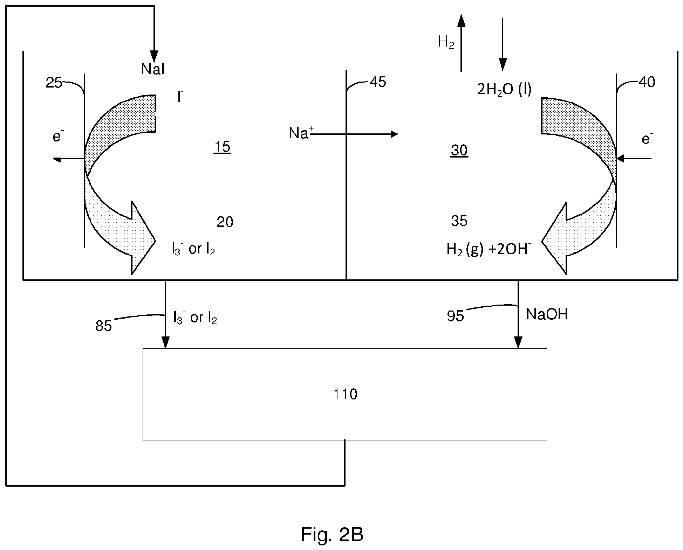

Turning now to the manner in which the cell 10 functions, the cell may function in any suitable manner apt for an electrolysis cell. To provide a better understanding of the manner in which the cell may function, Figures 2 A and 2B respectively show a representative embodiment of a flow chart and a schematic diagram depicting an embodiment of a method 200 in which the cell may produce hydrogen. In this regard, it should be noted that the systems and methods shown in Figures 2A and 2B can be rearranged, added to, shortened, and/or otherwise changed in any suitable manner.

At step 205, Figure 2 A shows that a representative embodiment of the described method 200 begins by providing the electrochemical cell 10 (as discussed above). Next, step 210 shows that the method continues as the alkali metal iodide anolyte 20 and hydrogen producing catholyte 35 are added to the cell. While the skilled artisan will recognize that the described systems and methods can be implemented with other suitable anolyte and/or catholyte (as discussed above), for the sake of simplicity, the following discussion focuses on using the cell with an anolyte 20 comprising sodium iodide and a catholyte 35 comprising water (e.g. , in the form of an aqueous solution of sodium hydroxide).

Moving on to step 215, Figure 2 A shows the method 200 continues by irradiating the photo anode 25, thereby oxidizing iodide ions to form molecular iodine and electrons or triiodide ions and electrons. In step 220, the electrons are conducted to the cathode 40. As this occurs, Figure 2B shows that (i) iodide ions (3I⁻) are oxidized at the anode 25 to form triiodide ions (I₃⁻) or molecular iodine, (ii) the sodium cations (Na⁺) are transported through the membrane 45, and (iii) water (H₂O) is reduced at the cathode 40 to form hydrogen gas (H₂) and hydroxide ions (OH⁻), the reduced product, which can react with the sodium cations to form sodium hydroxide (NaOH). The hydrogen gas (H₂) is collected 105 from the catholyte compartment 30 (also shown in Figure 1).

Similarly, the following reactions A and D show that, in at least some embodiments, the calculated open cell voltage for the cell 10 illustrated in Figure 2B is about 0.94V, which is smaller than the 1.23V over cell voltage for traditional water electrolysis.
(A) Oxidation reaction at the anode 25: NaI(s)→ ½I₂ + Na (E₀ = -3.0V)
(D) Reduction reaction at the cathode 40: Na + H₂O → NaOH + H₂ (E₀ = +3.94 V).

In this regard, the open cell voltage for the overall reaction is calculated as E₀ red + E₀ oxd = + 3.94 -3.0 = 0.94V.

The operation voltage of the cell is in the range from 0.6 to 1.5 V. The operation current density of the cell is in the range from 0.01 to 50 mA per square cm of membrane. Preferably, the operation current density is in the range from 10 to 30 mA/cm² . The operation temperature of the cell is in the range of -20 to 200 °C. Preferably, the operation temperature is in the range of 20 to 40 °C.

Next, step 230 shows that the method 200 can optionally continue as the alkali metal iodide in the anolyte is regenerated. In the foregoing example discussing sodium iodide as the anolyte oxidizable substance, the sodium iodide can be regenerated in any suitable manner. Indeed, in some embodiments, the sodium iodide is regenerated by reacting iodine formed during oxidation formed in the anolyte 20 with sodium hydroxide formed in the catholyte 35 (or some other suitable source). Accordingly, most, if not substantially all, of the sodium iodide (or other alkali metal salt) can be regenerated for use in the cell 10. Similarly sodium iodide can be regenerated by the reaction of triiodide ions and sodium hydroxide.

Again, it should be noted that while the current disclosure includes a method for regenerating the alkali metal iodide. Such a method may include the steps of recovering the molecular iodine or triiodide ions from the anolyte compartment, recovering the reduced product (sodium hydroxide in this example) from the catholyte compartment, and reacting the molecular iodine or triiodide ions and the reduced product to regenerate the alkali metal iodide. Figure 2B includes a regeneration cell 110, comprising an inlet to receive the oxidized product (molecular iodine or triiodide ions) 85 from the anolyte compartment and the reduced product 95 from the catholyte compartment. The regeneration cell 110 is configured to cause a chemical reaction between the oxidized product and the reduced product to regenerate the alkali metal iodide. In the case of the specific reactions depicted in Fig. 2B, the regeneration reaction includes reacting molecular iodine or triiodide ions with sodium hydroxide to regenerate sodium iodide. As depicted in Fig. 2B, the regenerated sodium iodide can be introduced into the anolyte compartment 15.

With respect to the manner in which sodium iodide is regenerated, in some embodiments, the sodium iodide is regenerated by mixing the molecular iodine or triiodide with sodium hydroxide. When sodium hydroxide is reacted with molecular iodine, the reaction can proceed in a variety of manners. By way of example, reactions F and G (below) show that in some embodiments when sodium hydroxide is reacted with iodine, sodium iodate forms. Nevertheless, reaction H (below) shows that, in other embodiments, the formation of sodium iodate can be avoided.
(F) 2NaOH + I₂ → NaI + NaOI + H₂O
(G) 3NaOI → NaIO₃ + 2NaI
(H) 2NaOH + I₂ → 2NaI + H₂O + ½O₂

Because the formation of a sodium iodate intermediate product may be less favorable than simply producing sodium iodide without forming sodium iodate, in some embodiments, the process is configured to preferentially facilitate or reaction H over reactions F and/or G. In this regard, the conversion of sodium hydroxide and iodine directly into sodium iodide, water, and oxygen (e.g., reaction H) can be driven in any suitable manner, including, without limitation, by adding highly concentrated sodium hydroxide (or another alkali hydroxide) to the iodine; by increasing the reaction temperature; by reacting the sodium hydroxide (or another alkali hydroxide) with the iodine in the presence of a catalyst, ultraviolet light, and/or ultrasonic vibrations; and/or by any other suitable conditions.

Light, heat, organic matter, and certain heavy metals (such as copper, nickel, manganese, and cobalt) accelerate the rate of decomposition of sodium hypoiodite. The presence of transition metal ions (copper and nickel) is known to catalyze the decomposition of liquid sodium hypoiodite, contributing to the loss of sodium hypoiodite strength and the formation of oxygen. Also sodium hypoiodite decomposition is dependent on temperature. For any given strength, the higher the temperature, the faster it decomposes.

Where the regeneration of sodium iodide (or another alkyl metal salt) is facilitated by adding highly concentrated sodium hydroxide (or another alkyl hydroxide) to molecular iodine (or to another oxidized product) (e.g., through reaction H), the sodium hydroxide (or other alkyl hydroxide) can have any suitable concentration before it is added to the iodine (or other oxidized product). In some embodiments, the concentration of the sodium hydroxide (or other alkyl hydroxide) that is added to the molecular iodine (or other oxidized product) is as low as a concentration selected from about 15%, about 25 %, about 30%, and about 35 % by weight. In contrast, in some embodiments, the concentration of sodium hydroxide (or another alkyl hydroxide) that is added to the molecular iodine (or another oxidized product) is as high as a concentration selected from about 35%, about 40%, about 50%, and about 65%, by weight. Indeed, in some embodiments, the concentration of the sodium hydroxide is between about 30% and about 50%, by weight, before the sodium hydroxide is added to the molecular iodine.

Where the sodium hydroxide (or another alkyl hydroxide) is concentrated before being added to the molecular iodine (or another oxidized material), the sodium hydroxide can be concentrated in any suitable manner. In this regard, some examples of suitable methods for concentrating the sodium hydroxide (or other alkyl hydroxide) include, but are not limited to evaporating solvent (e.g. , water) from the sodium hydroxide with heat obtained through solar energy, waste heat produced as an industrial byproduct, heat obtained through geothermal energy, Heat from joule heat generated during cell operation, and/or heat produced in any other suitable manner. Indeed, because heat obtained from solar energy, geothermal energy, and from industrial waste heat can be relatively inexpensive or substantially free. Such heat sources are also environmentally friendly. In some embodiments, the sodium hydroxide is concentrated through an evaporative process employing one or more such heat sources.

Where the regeneration of sodium iodide (or another alkali metal salt) is facilitated by heating the reaction (e.g. , to drive reaction H), the reaction can be heated to any suitable temperature. The temperature should be below the boiling point of the reactants. Indeed, in some embodiments, the reaction is heated to a temperature that is as high as a temperature selected from about 110 degrees Celsius, about 120 degrees Celsius, about 130 degrees Celsius, and about 140 degrees Celsius. Additionally, when the reaction is heated, the reaction may be kept below a temperature as low as a temperature selected from about 100 degrees Celsius, about 90 degrees Celsius, about 70 degrees Celsius, and about 60 degrees Celsius. Indeed, in some embodiments, the reaction is heated to a temperature between about 70 and about 140 degrees Celsius.

Where the regeneration reaction is driven by heating the reaction, the reaction can be heated in any suitable manner. For instance, the reaction can be heated with heat obtained from solar energy, geothermal energy, industrial waste heat, and/or any other suitable heat source.

Where the regeneration reaction (e.g., reaction H) is driven by reacting the sodium hydroxide (or another alkali hydroxide) with iodine (or another oxidized product) in the presence of a catalyst, the catalyst can comprise any suitable catalyst, including, without limitation, a carbon catalyst and/or a metal-oxide catalyst. In this regard, one example of a suitable catalyst includes, but is not limited to, a catalyst comprising copper oxide (CuO) and manganese dioxide (MnC).

Where the regeneration of the alkali metal salt (e.g., reaction H) is facilitated by exposing the reaction to ultraviolet light, the reaction may be exposed to any suitable wavelength of ultraviolet light, from any suitable source, including, without limitation, the sun, an ultraviolet lamp, etc.

Where the regeneration of the alkali metal salt (e.g., reaction H) is facilitated by exposing the reaction to ultrasonic vibrations, the reaction can be exposed to ultrasonic vibrations having any suitable frequency and amplitude.

Sodium iodate is generated when reaction F happens instead of H. For instance, the following reactions J and K describe some possible manners in which such embodiments of this process may occur:
(I)

   I₂ + 2OH⁻ → I⁻ + OI⁻ + H₂O
(J)

   3IO⁻ → 2I⁻ + IO₃⁻

Combining reactions K and L gives:
(K)

3I₂ + 6OH⁻ → IO₃⁻ + 5I⁻ + 3H₂O

While the iodate ion (IO₃⁻) can be converted to the iodide ion (I⁻) in any suitable manner, in some embodiments, the conversion of the iodate ion is possible when the ion is reduced in acidic conditions in the presence of a glassy carbon electrode modified by molybdenum oxides as shown in the following reaction N:
(L)

IO₃⁻+6H⁺ +6e⁻ ↔ I⁻ + 3H₂O

For a more detailed discussion concerning the conversion of the iodate ion to the iodide ion, see Luis Kosminsky, M.B. (1999), Studies on the catalytic reduction of iodate at glassy carbon electrodes by molybdenum oxides, Electro analytical Chemistry, 37-41.

The described systems and methods may have several beneficial characteristics. In one example, the described methods are able to efficiently produce hydrogen through a low voltage solar power driven method. Accordingly, some embodiments of the described systems and methods may more efficient and/or less expensive than some conventional methods of water electrolysis.

In another example, because the described systems and methods include an alkali cation selective membrane, the described systems advantageously allow the cell 10 to keep the contents of the anolyte 15 and catholyte 30 compartments separate. In this manner, the described systems and methods can allow the cell to function while the anolyte 20 and the catholyte 35 comprise different materials.

In still another example, because the alkali metal salt can be regenerated by mixing the oxidized product from the anolyte compartment 15 with the alkali hydroxide produced in the catholyte compartment 30, in some embodiments, most, if not all of the alkali metal iodide can be regenerated and be recycled through the cell 10 to produce more hydrogen. In this manner, the described systems and methods may be more efficient and less costly than they would otherwise be if the alkali metal iodide could not be regenerated.

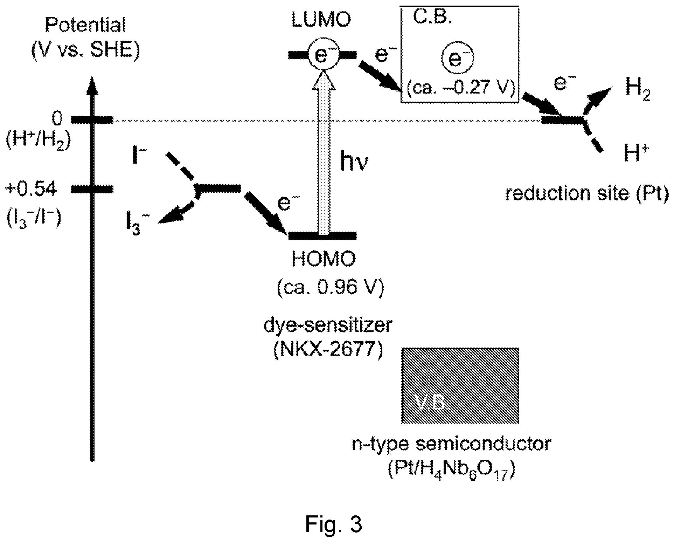

One important difference between a traditional water electrolyzer and embodiments of the disclosed invention is replacing the oxygen evolution reaction with the triiodide generation reaction having a lower standard reduction potential. By such replacement of the oxygen evolution reaction (OER) anode, the operational cell voltage can be much lower than 1.8V observed for state-of-the-art water electro lyzers. Specifically, the photo anode reaction is the oxidation of sodium iodide to triiodide. Coupling of the NaI-NaI₃ anode with NaOH cathode in an electrolysis cell with NaSICON separator results in the low- voltage generation of hydrogen. In one embodiment, the Open Circuit Voltage is in the range of 0.4 V to 1.2V. In another embodiment, the Open Circuit Voltage is about 0.7 V. The Voltage may be more or less depending on the type of anolyte solvent, pH of the anolyte, and the anolyte temperature. Figure 3 shows that the theoretical potential difference between triiodide reaction and hydrogen evolution reaction is ~ 0.54 V.

The following examples and experimental results are given to illustrate various embodiments within the scope of the present invention. These are given by way of example only, and it is understood that the following examples are not comprehensive or exhaustive of the many types of embodiments of the present invention that can be prepared in accordance with the present invention.

### EXAMPLES

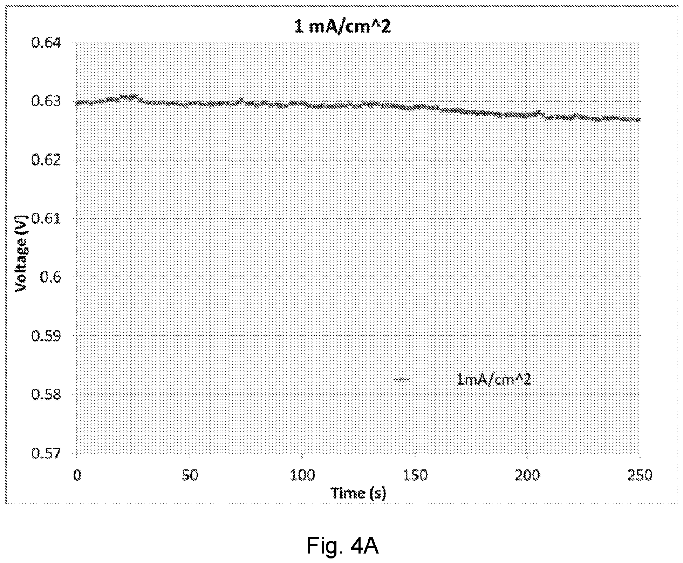

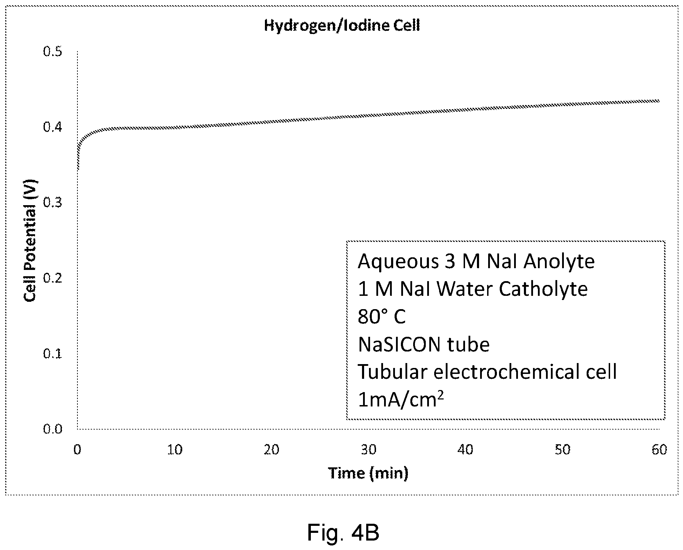

In one example showing how the electrolysis system of the presently disclosed invention may function to generate hydrogen, a cell with an anolyte consisting of a 1 : 1 weight ratio of sodium iodide (Nal) to graphite with a small amount of glycerol to bind the mixture was electrolyzed. The catholyte used was a 15wt% NaOH solution. The cell was operated at 65 °C at a current density of 1 mA/cm² . Figures 4A shows the voltage vs. time plot for this test. In a second test, aqueous Nal (70 wt.%) was utilized in a 90 °C NaSICON based electrolysis cell and a constant current of 1 mA is applied across the membrane. Figures 4B shows the voltage vs. time plot for this test. The data clearly shows the cell voltage well below the hydrogen evolution voltage of the traditional water electrolyzer (> 1.23 V).

It will be appreciated that the disclosed invention provides systems and methods for producing hydrogen through the use of an electrochemical cell in which the anode comprises the anode components of a dye-sensitized solar cell (DSSC). The cost to produce hydrogen according to the disclosed invention is mainly based upon capital costs and not on operational electricity costs.

Specific embodiments and examples of the present invention have been illustrated and described. The scope of protection is only limited by the scope of the accompanying claims.

## Claims

1. A process for producing hydrogen, the method comprising:
providing an electrochemical cell comprising:
an anolyte compartment holding an anolyte, the anolyte compartment comprising a photo anode in contact with the anolyte, wherein the anolyte comprises an alkali metal iodide;
a catholyte compartment holding a catholyte, the catholyte compartment comprising a cathode in contact with the catholyte, wherein the catholyte comprises water, methanol, or a combination thereof; and
an alkali cation conductive membrane selective to cations of the alkali metal separates the anolyte compartment from the catholyte compartment;
irradiating the photo anode to oxidize the alkali metal iodide to form molecular iodine and electrons or triiodide ions and electrons; and
conducting electrons from the photo anode to the cathode to reduce water, methanol, or a combination thereof to form hydrogen and alkali hydroxide, alkali methoxide or a combination thereof;
wherein the photo anode comprises a dye-sensitized solar cell-based anode.

2. The process of claim 1, wherein the dye-sensitized solar cell-based anode comprises a transparent conductive material layer on an optically transparent glass substrate to form a transparent conductive substrate.

3. The process of claim 2, wherein the photo anode further comprises a wide gap semiconductor current collector in communication with or attached to the transparent conductive substrate.

4. The process of claim 3, wherein the photo anode further comprises a photo receptive dye in communication with or attached to the transparent conductive substrate.

5. The process of claim 1, wherein the alkali cation conductive membrane is selected from a NaSICON membrane, a LiSICON membrane, a KSICON membrane, a KSICON-type membrane, a sodium conducting glass, a (β or β" alumina membrane, and a solid polymeric sodium ion conductive membrane.

6. The process of claim 1, wherein the alkali metal iodide comprises sodium iodide; and wherein the process optionally further comprises oxidizing the sodium iodide in the anolyte to form molecular iodine or sodium triiodide, and optionally further comprises regenerating the sodium iodide by reacting the molecular iodine or sodium triiodide with sodium hydroxide.

7. The process of claim 1, further comprising:
recovering the molecular iodine or triiodide ions from the anolyte compartment;
recovering the alkali hydroxide, alkali methoxide or a combination thereof from the catholyte compartment; and
reacting the molecular iodine or triiodide ions with the alkali hydroxide, alkali methoxide or a combination thereof to regenerate the alkali metal iodide.

8. The process of claim 1, wherein the catholyte comprises an aqueous solution of sodium hydroxide or a non-aqueous methanol/sodium methoxide solution.

9. An electrochemical cell comprising:
an anolyte compartment holding an anolyte, the anolyte compartment comprising a dye-sensitized solar cell type photo anode in contact with the anolyte, wherein the anolyte comprises an alkali metal iodide, and wherein the photo anode, when irradiated, is configured to oxidize the alkali metal iodide to form molecular iodine and electrons or triiodide ions and electrons;
a catholyte compartment holding a catholyte, the catholyte compartment comprising a cathode in contact with the catholyte, wherein the catholyte comprises water, methanol, or a combination thereof;
an alkali cation conductive membrane selective to cations of the alkali metal, the membrane being positioned between the anolyte compartment and the catholyte compartment;
an electrical connection between the photo anode and the cathode configured to provide an electrical pathway for the electrons formed at the photo anode to travel to the cathode to water, methanol, or a combination thereof in the catholyte compartment to form hydrogen and alkali hydroxide, alkali methoxide or a combination thereof;
an anolyte compartment outlet for removing the molecular iodine or triiodide ions; and
a catholyte compartment outlet for removing the reduced product.

10. The electrochemical cell of claim 9, further comprising a regeneration cell, comprising an inlet to receive the molecular iodine or triiodide ions from the anolyte compartment and the reduced product from the catholyte compartment, wherein the regeneration cell is configured to cause a chemical reaction between the molecular iodine or triiodide ions and the reduced product to regenerate the alkali metal iodide.

11. The electrochemical cell of claim 9, wherein the dye-sensitized solar cell type anode comprises a transparent conductive material layer on an optically transparent glass substrate to form a transparent conductive substrate.

12. The electrochemical cell of claim 11, wherein the anode further comprises a wide gap semiconductor current collector in communication with or attached to the transparent conductive substrate.

13. The electrochemical cell of claim 12, wherein the anode further comprises a photo receptive dye in communication with or attached to the transparent conductive substrate.

14. The electrochemical cell of claim 9, wherein the alkali cation conductive membrane is selected from a NaSICON membrane, a LiSICON membrane, a KSICON membrane, a sodium conducting glass, a beta alumina membrane, and a solid polymeric sodium ion conductive membrane.

## Patentansprüche

1. Verfahren zum Herstellen von Wasserstoff, das Verfahren umfassend:
Bereitstellen einer elektrochemischen Zelle, umfassend:
ein Anolyt-Kompartiment, das einen Anolyten enthält, das Anolyt-Kompartiment umfassend eine Photoanode in Kontakt mit dem Anolyten, wobei der Anolyt ein Alkalimetalliodid umfasst;
ein Katholyt-Kompartiment, das einen Katholyten enthält, das Katholyt-Kompartiment umfassend eine Kathode in Kontakt mit dem Katholyten, wobei der Katholyt Wasser, Methanol oder eine Kombination davon umfasst; und
eine für Kationen des Alkalimetalls selektiv leitende Alkali-Kationen-Membran trennt das Anolyt-Kompartiment vom Katholyt-Kompartiment;
Bestrahlen der Photoanode zum Oxidieren des Alkalimetalliodids zum Bilden von molekularem Iod und Elektronen oder Triiodidionen und Elektronen; und
Leiten von Elektronen von der Photoanode zu der Kathode, um Wasser, Methanol oder eine Kombination davon zu reduzieren und Wasserstoff und Alkalihydroxid, Alkalimethoxid oder eine Kombination davon zu bilden;
wobei die Photoanode eine Anode auf Basis einer Farbstoffsolarzelle umfasst.

2. Verfahren nach Anspruch 1, wobei die Anode auf Basis einer Farbstoffsolarzelle eine transparente leitende Materialschicht auf einem optisch transparenten Glassubstrat umfasst, um ein transparentes leitendes Substrat zu bilden.

3. Verfahren nach Anspruch 2, wobei die Photoanode ferner einen Halbleiterstromkollektor mit großem Abstand umfasst, der mit dem transparenten leitenden Substrat in Verbindung ist oder daran angebracht ist.

4. Verfahren nach Anspruch 3, wobei die Photoanode ferner einen lichtempfindlichen Farbstoff umfasst, der mit dem transparenten leitenden Substrat in Verbindung ist oder daran angebracht ist.

5. Verfahren nach Anspruch 1, wobei die Alkali-Kationen-leitende Membran ausgewählt ist aus einer NaSICON-Membran, einer LiSICON-Membran, einer KSICON-Membran, einer KSICON-Typ-Membran, einem Natrium-leitenden Glas, einer (β- oder β"-Aluminiumoxid-Membran und einer festen polymeren Natriumionen-leitenden Membran.

6. Verfahren nach Anspruch 1, wobei das Alkalimetalliodid Natriumiodid umfasst; und wobei das Verfahren optional ferner ein Oxidieren des Natriumiodids in dem Anolyt umfasst, um molekulares Iod oder Natriumtriiodid zu bilden, und optional ferner ein Regenerieren des Natriumiodids durch Reaktion des molekularen Iods oder Natriumtriiodids mit Natriumhydroxid umfasst.

7. Verfahren nach Anspruch 1, ferner umfassend:
Rückgewinnen der molekularen Iod- oder Triiodidionen aus dem Anolyt-Kompartiment;
Rückgewinnen des Alkalihydroxids, Alkalimethoxids oder einer Kombination davon aus dem Katholyten-Kompartiment; und
Reagieren der molekularen Iod- oder Triiodidionen mit dem Alkalihydroxid, Alkalimethoxid oder einer Kombination davon, um das Alkalimetalliodid zu regenerieren.

8. Verfahren nach Anspruch 1, wobei der Katholyt eine wässrige Lösung von Natriumhydroxid oder eine nichtwässrige Methanol/Natriummethoxid-Lösung umfasst.

9. Elektrochemische Zelle, umfassend:
ein Anolyt-Kompartiment, das einen Anolyten enthält, wobei das Anolyt-Kompartiment eine Photoanode vom Typ einer Farbstoffsolarzelle in Kontakt mit dem Anolyt umfasst, wobei der Anolyt ein Alkalimetalliodid umfasst und wobei die Photoanode, wenn sie bestrahlt wird, konfiguriert ist, um das Alkalimetalliodid zu oxidieren, um molekulares Iod und Elektronen oder Triiodidionen und Elektronen zu bilden;
ein Katholyt-Kompartiment, das einen Katholyten enthält, wobei das Katholyt-Kompartiment eine Kathode in Kontakt mit dem Katholyten umfasst, wobei der Katholyt Wasser, Methanol oder eine Kombination davon umfasst;
eine für Kationen des Alkalimetalls selektiv leitende Alkali-Kationen-Membran, wobei die Membran zwischen dem Anolyt-Kompartiment und dem Katholyt-Kompartiment positioniert ist;
eine elektrische Verbindung zwischen der Photoanode und der Kathode, die konfiguriert ist, um einen elektrischen Pfad für die an der Photoanode gebildeten Elektronen bereitzustellen, um zu der Kathode zu Wasser, Methanol oder einer Kombination davon in dem Katholyten-Kompartiment zu wandern, um Wasserstoff und Alkalihydroxid, Alkalimethoxid oder eine Kombination davon zu bilden;
einen Anolyt-Kompartiment-Auslass zum Entfernen der molekularen Iod- oder Triiodidionen; und
einen Katholyt-Kompartiment-Auslass zum Entfernen des reduzierten Produkts.

10. Elektrochemische Zelle nach Anspruch 9, ferner umfassend eine Regenerationszelle, umfassend einen Einlass, um die molekularen Iod- oder Triiodidonen aus dem Anolyt-Kompartiment und das reduzierte Produkt aus dem Katholyt-Kompartiment aufzunehmen, wobei die Regenerationszelle konfiguriert ist, um eine chemische Reaktion zwischen den molekularen Iod- oder Triiodidionen und dem reduzierten Produkt zu bewirken, um das Alkalimetalliodid zu regenerieren.

11. Elektrochemische Zelle nach Anspruch 9, wobei die Anode vom Typ Farbstoffsolarzelle eine transparente leitende Materialschicht auf einem optisch transparenten Glassubstrat umfasst, um ein transparentes leitendes Substrat zu bilden.

12. Elektrochemische Zelle nach Anspruch 11, wobei die Anode ferner einen HalbleiterStromkollektor mit großem Abstand umfasst, der mit dem transparenten leitenden Substrat in Verbindung ist oder daran angebracht ist.

13. Elektrochemische Zelle nach Anspruch 12, wobei die Anode ferner einen lichtempfindlichen Farbstoff umfasst, der mit dem transparenten leitenden Substrat in Verbindung ist oder daran angebracht ist.

14. Elektrochemische Zelle nach Anspruch 9, wobei die Alkali-Kationen-leitende Membran ausgewählt ist aus einer NaSICON-Membran, einer LiSICON-Membran, einer KSICON-Membran, einem Natrium-leitenden Glas, einer Beta-Aluminiumoxid-Membran und einer festen polymeren Natriumionen-leitenden Membran.

## Revendications

1. Procédé pour produire de l'hydrogène, le procédé comprenant :
la fourniture d'une cellule électrochimique comprenant :
un compartiment d'anolyte contenant un anolyte, le compartiment d'anolyte comprenant une photo-anode en contact avec l'anolyte, où l'anolyte comprend un iodure de métal alcalin ;
un compartiment de catholyte contenant un catholyte, le compartiment de catholyte comprenant une cathode en contact avec le catholyte, où le catholyte comprend de l'eau, du méthanol ou une combinaison de ceux-ci ; et
une membrane conductrice de cations alcalins sélective des cations du métal alcalin sépare le compartiment d'anolyte du compartiment de catholyte ;
l'irradiation de la photo-anode pour oxyder l'iodure de métal alcalin pour former de l'iode moléculaire et des électrons ou des ions de triiodure et des électrons ; et
la conduction des électrons de la photo-anode à la cathode pour réduire l'eau, le méthanol, ou une combinaison de ceux-ci pour former de l'hydrogène et de l'hydroxyde alcalin, du méthoxyde alcalin ou une combinaison de ceux-ci ;
où la photo-anode comprend une anode à base de cellule solaire sensibilisée au colorant.

2. Procédé selon la revendication 1, où l'anode à base de cellule solaire sensibilisée au colorant comprend une couche de matériau conducteur transparent sur un substrat de verre optiquement transparent pour former un substrat conducteur transparent.

3. Procédé selon la revendication 2, où la photo-anode comprend en outre un collecteur de courant à semi-conducteur à espace large en communication avec le substrat conducteur transparent ou fixé à celui-ci.

4. Procédé selon la revendication 3, où la photo-anode comprend en outre un colorant photorécepteur en communication avec le substrat conducteur transparent ou fixé à celui-ci.

5. Procédé selon la revendication 1, où la membrane conductrice de cations alcalins est sélectionnée entre une membrane NaSICON, une membrane LiSICON, une membrane KSICON, une membrane de type KSICON, un verre conducteur du sodium, une membrane d'alumine (β ou β", et une membrane polymérique solide conductrice des ions de sodium.

6. Procédé selon la revendication 1, où l'iodure de métal alcalin comprend l'iodure de sodium ; et où le procédé comprend en outre optionnellement l'oxydation de l'iodure de sodium dans l'anolyte pour former de l'iode moléculaire ou du triiodure de sodium, et comprend en outre optionnellement la régénération de l'iodure de sodium par réaction de l'iode moléculaire ou du triiodure de sodium avec l'hydroxyde de sodium.

7. Procédé selon la revendication 1, comprenant en outre :
la récupération des ions d'iode moléculaire ou de triiodure dans le compartiment d'anolyte ;
la récupération de l'hydroxyde alcalin, du méthoxyde alcalin ou d'une combinaison de ceux-ci dans le compartiment de catholyte ; et
la réaction des ions d'iode moléculaire ou de triiodure avec l'hydroxyde alcalin, le méthoxyde alcalin ou une combinaison de ceux-ci pour régénérer l'iodure de métal alcalin.

8. Procédé selon la revendication 1, où le catholyte comprend une solution aqueuse d'hydroxyde de sodium ou une solution non aqueuse de méthanol/méthoxyde de sodium.

9. Cellule électrochimique comprenant :
un compartiment d'anolyte contenant un anolyte, le compartiment d'anolyte comprenant une photo-anode de type cellule solaire sensibilisée au colorant en contact avec l'anolyte, où l'anolyte comprend un iodure de métal alcalin, et où la photo-anode, lorsqu'elle est irradiée, est configurée pour oxyder l'iodure de métal alcalin pour former de l'iode moléculaire et des électrons ou des ions de triiodure et des électrons ;
un compartiment de catholyte contenant un catholyte, le compartiment de catholyte comprenant une cathode en contact avec le catholyte, où le catholyte comprend de l'eau, du méthanol ou une combinaison de ceux-ci ;
membrane conductrice de cations alcalins sélective des cations du métal alcalin, la membrane étant positionnée entre le compartiment d'anolyte et le compartiment de catholyte ;
une connexion électrique entre la photo-anode et la cathode, configurée pour fournir un chemin électrique pour permettre aux électrons formés sur la photo-anode de circuler vers la cathode, l'eau, le méthanol ou une combinaison de ceux-ci dans le compartiment de catholyte pour former l'hydrogène et l'hydroxyde alcalin, le méthoxyde alcalin ou une combinaison de ceux-ci ;
une sortie du compartiment d'anolyte pour enlever les ions d'iode moléculaire ou de triiodure ; et
une sortie du compartiment de catholyte pour enlever le produit réduit.

10. Cellule électrochimique selon la revendication 9, comprenant en outre une cellule de régénération comprenant une entrée pour recevoir les ions d'iode moléculaire ou de triiodure du compartiment d'anolyte et le produit réduit du compartiment de catholyte, où la cellule de régénération est configurée pour provoquer une réaction chimique entre les ions d'iode moléculaire ou de triiodure et le produit réduit pour régénérer l'iodure de métal alcalin.

11. Cellule électrochimique selon la revendication 9, où l'anode de type cellule solaire sensibilisée au colorant comprend une couche de matériau conducteur transparent sur un substrat de verre optiquement transparent pour former un substrat conducteur transparent.

12. Cellule électrochimique selon la revendication 11, où l'anode comprend en outre un collecteur de courant à semi-conducteur à espace large en communication avec le substrat conducteur transparent ou fixé à celui-ci.

13. Cellule électrochimique selon la revendication 12, où l'anode comprend en outre un colorant photorécepteur en communication avec le substrat conducteur transparent ou fixé à celui-ci.

14. Cellule électrochimique selon la revendication 9, où la membrane conductrice de cations alcalins est sélectionnée entre une membrane NaSICON, une membrane LiSICON, une membrane KSICON, un verre conducteur de sodium, une membrane de bêta-alumine, et une membrane polymérique solide conductrice des ions de sodium.
